# EUROPEAN PATENT APPLICATION

(11) **EP 2 226 757 A1**
(43) Date of publication of application: **08.09.2010**
(21) Application number: 09154484.1
(22) Date of filing: 06.03.2009
(51) Int. Cl.: G06Q 30/00

(54) **System and method for associating content and advertisement**

(71) Applicant: RESEARCH IN MOTION LIMITED, Waterloo, Ontario N2L 3W8 (CA)
(72) Inventor: Shenfield, Michael, Richmond Hill Ontario L4C 3S9 (CA)
(74) Representative: Patel, Binesh

(57) **Abstract**

A method and system for associating content and advertisement at a delivery client on a device, the method receiving a first data set having a metadata link associated therewith, the metadata link implies retrieval of a second data set; retrieving the second data set from a location defined by the metadata link; providing content to a first application, the content being one of the first data set and the second data set; and providing an advertisement to the first application or to a second application, the advertisement being the other one of the first data set and the second data set.

## Description

### FIELD OF THE DISCLOSURE

The present disclosure relates to content and advertisement delivery, and in particular to content and advertisement delivery utilizing metadata.

### BACKGROUND

Dynamic content delivery allows the passing of content to an application seeking the content, either through a pull or pushed based model. Content metadata is associated with the content and enables the proper delivery and handling of that content. Content metadata could include information about how to handle the content, when the content will expire, the application the content relates to, among other information.

Content metadata can have various attributes associated therewith. For example, the Open Mobile Alliance (OMA) dynamic content delivery (DCD) specification introduces various attributes for the content metadata, one of which is the "aux-content-link" attribute. The aux-content-link attribute provides a content identifier or link to additional content that is related to the content item or items being delivered. The intent of the attribute is to support pre-fetching content or progressive fetching of content referred to by the main content item, and likely to be requested later.

The aux-content-link attribute was provided in the DCD specification to be used when the DCD enabler delivers content via progressive download. The DCD specification mandates that the attribute be used as follows. If the aux-content-link content metadata attribute is present, the DCD client must send a DCD-1 ContentUpdateRequest message to the DCD server at the indicated link; and for content items being delivered by a progressive download, the DCD server must set the aux-content-link metadata attribute to the universal resource indicator (URI) of the next download segment, if any. The metadata attribute could be specified by either content provider or service provider.

### SUMMARY

The present disclosure provides a method for associating content and advertisement at a delivery client on a device, the method comprising: receiving a first data set having a metadata link associated therewith, the metadata link implies retrieval of a second data set; retrieving the second data set from a location defined by the metadata link; providing content to a first application, the content being one of the first data set and the second data set; and providing an advertisement to the first application or to a second application, the advertisement being the other one of the first data set and the second data set.

The present disclosure further provides a device including a delivery client for associating content and advertisement, device comprising: a communications subsystem; an application configured to consume content and advertisement; the delivery client configured to: receive a first data set over the communications subsystem, the first data set including a metadata link associated therewith that implies retrieval of a second data set; retrieve the second data set from a location defined by the metadata link; provide content to a first application, the content being one of the first data set and the second data set; and provide the advertisement to the first application or a second application, the advertisement being the other one of the first data set and the second data set.

### BRIEF DESCRIPTION OF THE DRAWINGS

The present application will be better understood with reference to the drawings, in which:
**Figure 1** is a data flow diagram of a first embodiment of the present system and method;
**Figure 2** is a data flow diagram showing the embodiment of **Figure 1** in which a mobile advertising client is added;
**Figure 3** is a data flow diagram showing an alternative scenario for the present system and method;
**Figure 4** is a data flow diagram showing the embodiment of **Figure 3** in which a mobile advertising client is added;
**Figure 5** is a block diagram showing an exemplary metadata envelope that could be used with the present disclosure;
**Figure 6** is a block diagram showing an exemplary metadata envelope with a processing document as part of a metadata link; and
**Figure 7** is a block diagram showing an exemplary mobile device that can be used with the method and system of the present disclosure.

### DETAILED DESCRIPTION

The present disclosure utilizes the OMA DCD attribute "aux-content-link" to obtain additional content or advertising, as described below. The present disclosure is however not limited to the OMA DCD specification, nor to the specific attribute "aux-content-link". In other delivery architectures, other attributes may provide links to obtain additional content, and the use of the OMA DCD terminology below is merely exemplary.

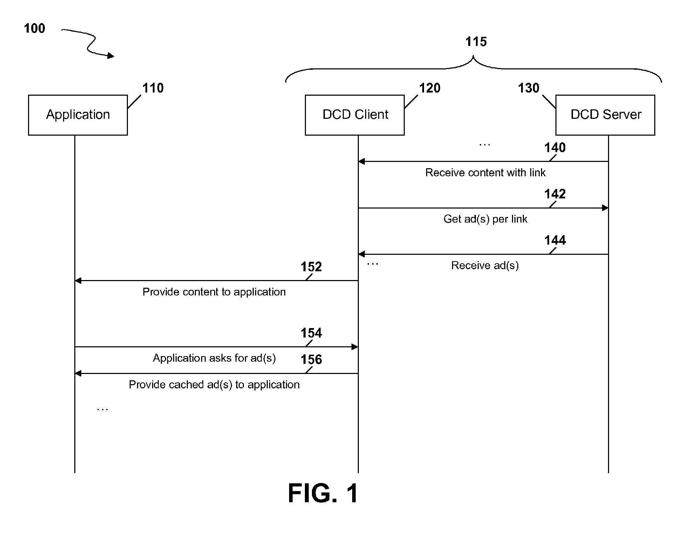

Reference is now made to **Figure 1****.**

A dynamic content delivery architecture **100** includes, in part, an application **110** and a dynamic content delivery enabler **115** with a DCD client **120** and DCD Server **130.** The architecture **100** further includes at least one content provider (not shown) communicating with the DCD server **130** to provide content requested by theapplication **110.** The content provider could also be an advertisement provider. Further, a proxy (not shown) may include DCD server **130,** or DCD server **130** could be part of a network element.

Application **110,** as used herein, is an application that consumes both content and advertisements. Application **110** can be, for example, a browser, a media player for playing video and/or audio files, a stock application, a weather application, among others. The present disclosure is not meant to be limited to any specific application **110** and those skilled in the art will realize that other applications than those listed exist.

Application **110** communicates with a dynamic content delivery enabler **115,** which includes DCD client **120.** DCD client **120** may be a client on a mobile device or a computer which permits an application **110** to register with it and further provides for communication over a network with a dynamic content delivery server **130.**

In the dynamic content delivery environment, the dynamic content delivery client 120 communicates with a dynamic content delivery server **130** and provides subscriptions for various content. DCD server **130** could register with various content providers (not shown) and either request data (pull) from the content provider or receive published data (push) from the content provider.

The process of **Figure 1** is shown to include the reception of a message **140** from DCD server **130** by DCD client **120,** the message **140** having a data set, the data set being content for application **110,** and further including a link within the metadata.

The link, in one embodiment, is the aux-content-link attribute according to the OMA DCD specification.

The reception of message **140** by DCD client **120** could be based on a solicited message or could be unsolicited. Thus, DCD client **120** may have provided a request to DCD server **130** prior to receiving message **140.** Alternatively, message **140** could be unsolicited based on a push from DCD server **130** to DCD client **120** when certain content becomes available. For example, DCD client **120** may have registered with DCD server **130** to receive certain types of content and, when the content becomes available, DCD server **130** may push the content to DCD client **120.**

Responsive to message **140,** the DCD client **120** processes the content and recognizes the aux-content-link attribute in the metadata for the content. Based on recognition of the aux-content-link attribute in the content, a message **142** is sent from DCD client **120** to the DCD server **130.** In the case of **Figure 1****,** the link refers to an advertisement. For example, a device such as a mobile device or computer has subscribed to receive content but has also opted to receive advertisements in order to reduce or offset the price of the content received. In this case, the content received in message **140** could include a link to advertisements in the aux-content-link attribute and message **142** is used to retrieve the further data set, being the advertisement according to the link.

In one embodiment, message **142** is sent to DCD server **130** requesting the content associated with the aux-content-link. In other embodiments, message **142** could be sent directly to an advertisement provider, rather than sending a message through DCD server **130.** For example, the aux-content-link attribute could specify an address or uniform resource identifier (URI) for the advertisement provider and/or an advertisement resource stored thereby.

Message **144** is returned in response to message **142.** In message **144,** the advertisement that is provided in the link of message **140** is provided to the dynamic content delivery client **120.**

In some embodiments the use of the auxiliary content link may be beneficial when compared to merely providing the advertisement as part of the content of message **140.** The use of the link reduces the size of message **140** that is passed to the DCD client **120.** This may be important when push bearers are used. For example, push bearers may have a maximum size of data that can be pushed to the DCD client **120.** By using an attribute such that the DCD client **120** retrieves the advertisement in a separate or distinct message (e.g., message **144),** space can be retained for the content portion of message **140.**

Further, the use of the aux-content-link attribute allows the advertisement to be preloaded onto a device such as a mobile device or computer. In this way, the user of the device may receive and view the advertisement when the content is consumed on the device. Specifically, the content that is pushed to the device or received by the device may not be consumed for a period of time. If using a mobile device, the user may be in an out of coverage situation when consuming the content, where the advertisement cannot be retrieved. This may degrade the user experience by requiring the user to wait for the retrieval of an advertisement.

Furthermore, preloading the advertisement may reduce delays during the consumption of the content. If an application is configured to load an advertisement during (i.e., substantially simultaneously with) content consumption, network conditions may cause delays that result in poor performance of the application.

Referring again to **Figure 1****,** when application **110** needs or is otherwise ready to present the content, DCD client **120** provides the content to the application. This is shown by message **152.** Message **152,** as will be appreciated by those skilled in the art, could be a solicited response to a request by application **110** for the content. Alternatively, message **152** could be communicated from DCD client **120** to application **110** in an unsolicited manner such that message **152** is pushed by DCD client **120** to application **110.**

Application **110** receives the content from message **152** and processes the content. Part of the content includes the indication that an advertisement is associated with the received content. In response to receipt of message **152** the application **110** communicates in message **154** to DCD client **120** requesting the advertisement(s). The application asks for the advertisement by a link. The link is, in one embodiment, the same as the aux-content-link attribute. Thus, the link could be, for example, a universal resource locator (URL) or other identifier such as a URI.

DCD client **120** in response to receiving message **154,** provides the cached advertisement to the application or to a second application configured to process the advertisement in message **156.** Since the advertisement is cached the user does not need to wait for the advertisement and the advertisement is still displayed even if a mobile device is in an out of coverage situation.

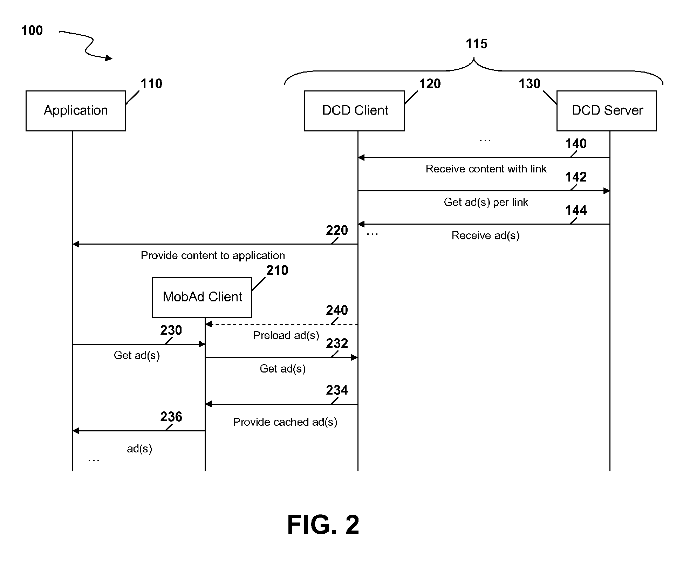

Reference is now made to **Figure 2****.** In some advertisement scenarios, a mobile advertising (MobAd) client is configured between an application **110** and DCD Client **120** to provide advertisements. **Figure 2** shows the data flow of **Figure 1** with the exception that a mobile advertising client **210** is added. In this case, application **110** knows that in order to receive advertisements, the application **110** needs to communicate with mobile advertising client **210** in cooperation with DCD client **120.**

The example of **Figure 2** starts the reception of message **140** by DCD client **120,** message **140** containing a content data set. Again, message **140** could be solicited or unsolicited as described previously.

In response to receiving message **140,** DCD client **120** sends message **142** to retrieve the data associated with the metadata link attribute. In this case, an advertisement is provided in the link and DCD client **120** requests the advertisement either from DCD server **130** or directly from an advertising provider (not shown) in message **142.**

Responsive to message **142,** DCD server **130** (or an advertisement provider) responds by communicating the further data set in message **144,** the further data set being an advertisement.

DCD client **120** then provides the content to application **110** in message **220.** Message **220** only provides the content to the application and could be solicited based on a request from the application to DCD client **120** for content, or could be unsolicited and based on a push scenario from DCD client **120** to application **110.**

Application **110,** when processing the content received in message **220** recognizes or otherwise determines that an advertisement is associated with the received content and the application **110** sends a message **230** to advertising client **210** to get an advertisement. The advertisement is referenced by URL or ID and the reference to the advertisement, in one embodiment, matches the method of identifying the advertisement in an aux-content-link attribute.

Mobile advertising client **210** can then send message **232** to DCD client **120** in order to get the advertisement(s) requested by message **230.** In response to message **232,** DCD client returns message **234** providing the cached advertisement or advertisements. These advertisements are then returned to the application **110** utilizing the message **236.**

Alternatively, mobile advertising client **210** can be preloaded with the advertisement(s), for example at an instant of time that is substantially simultaneous with or otherwise corresponding to reception of ad(s) (i.e., message 144) at the DCD client **120.** This is shown by the dotted line **240,** which indicates that advertisements may be provided in advance to advertising client **210.** In the case where advertisements are preloaded at mobile advertising client 210, messages **232** and **234** may not be communicated.

**Figures 1** and **2** therefore provide for the link within metadata that allows a content item to be associated with advertisements when the content is delivered. The DCD client **120** receives a link such as a URL of the associated advertisements when it processes the received content items. It retrieves and caches the advertisement for future delivery to a device application that consumes the content items or to another application dedicated to mobile advertisement. Such advertisement could be specified in an aux-content-link by URL, which could point to an advertiser, service provider or content provider domain or by any identifier such as a universal resource identifier (URI) recognizable by the DCD server **130.**

An example of a message **140** from **Figures 1** and **2** above could be:

Example 1 (content packaged with DCD envelope format):

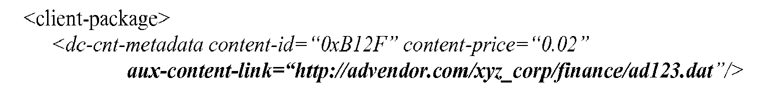

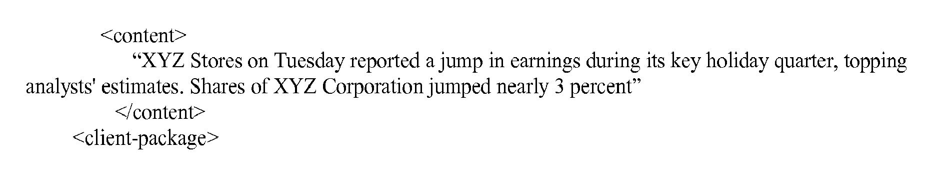

Example 2 (content packaged in RSS feed with DCD metadata embedded in the feed):

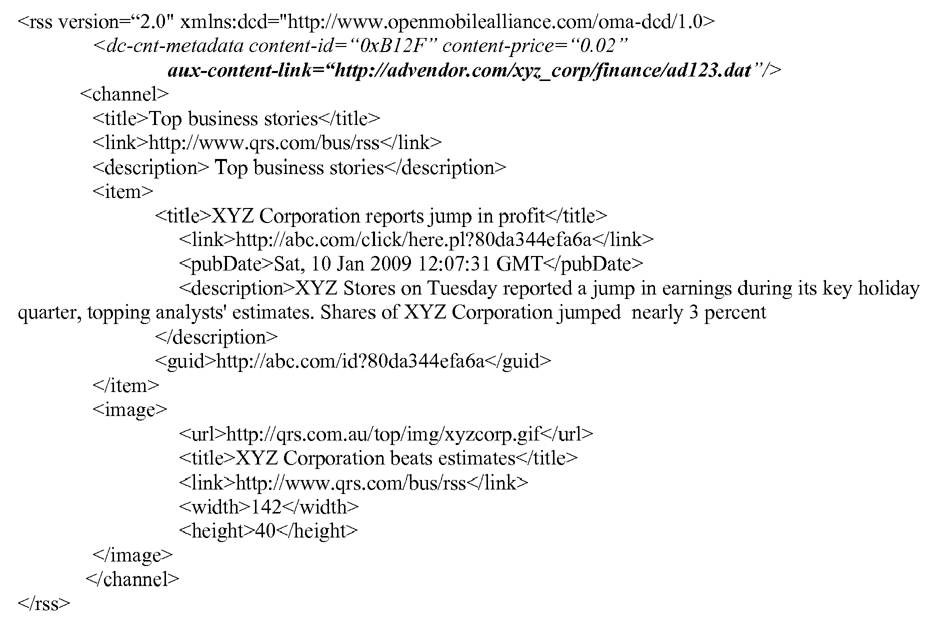

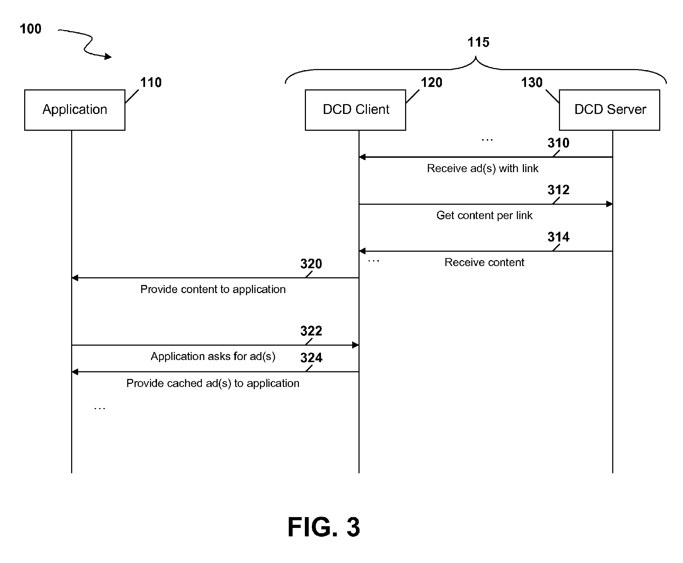

Reference is now made to **Figure 3. Figure 3** illustrates an alternative embodiment for delivering content. In **Figure 3****,** application **110** communicates with DCD enabler **115,** which may include DCD client **120** communicating, cooperating or otherwise associated with DCD server **130.**

Instead of providing content with an aux-content-link to an advertisement, the embodiment of **Figure 3** provides a data set containing an advertisement in message **310** with an aux-content-link attribute pointing to a further data set containing associated content. That is, in comparison with Figure 1, the content is referenced by the aux-content-link attribute instead of the advertisement.

Message **310** can either be either solicited or unsolicited. In other words, DCD client **120** could have requested content from DCD server **130** in which case the message **310** is solicited and is a pull response.

Alternatively, the message **310** could be unsolicited and result from a push of content from DCD server **130** to DCD client **120.**

In response to receiving message **310,** DCD client **120** sends message **312** to DCD server **130.** Message **312** communicated from DCD client **120** to the DCD server **130** to request and obtain the content specified in the aux-content-link attribute.

In response to message **312,** DCD server **130** sends message **314,** containing the requested content, back to DCD client **120.**

Alternatively, instead of sending message **312** and **314** from DCD client **120** and DCD server **130** respectively, the aux-content-link could have a link to a source for the content that is outside of the DCD server. In this case, message **312** would directly link to the provider of the content and message **314** would be a response from the provider of the content.

Once DCD client **120** has received the content and the advertisement according to messages **314** and **310** respectively, DCD client **120** then provides the content to application **110** in message **320.** Message **320** can again, as described previously, be either solicited or unsolicited. If the message **320** is solicited, it is communicated as a result of a request (not shown) from application **110** to DCD client **120.** If message **320** is unsolicited then it is a push from the DCD client **120** to application **110.**

Application **110** processes the content received in message **320** and recognizes or otherwise determinesthat advertisements are required. Application **110** then sends a message **322** to DCD client **120** to receive the advertisement.

In one embodiment, message **322** specifies the desired advertisement(s) by a reference such as a content identifier. This is done since message **310** contained a content identifier rather than an advertising identifier, as in the embodiment of **Figure 1****.**

In response to message **322,** DCD client **120** responds with message **324** to application **110.** Alternatively, a second application may receive the advertisement and process it. Message **324** provides the advertisement that is cached by DCD client **120.**

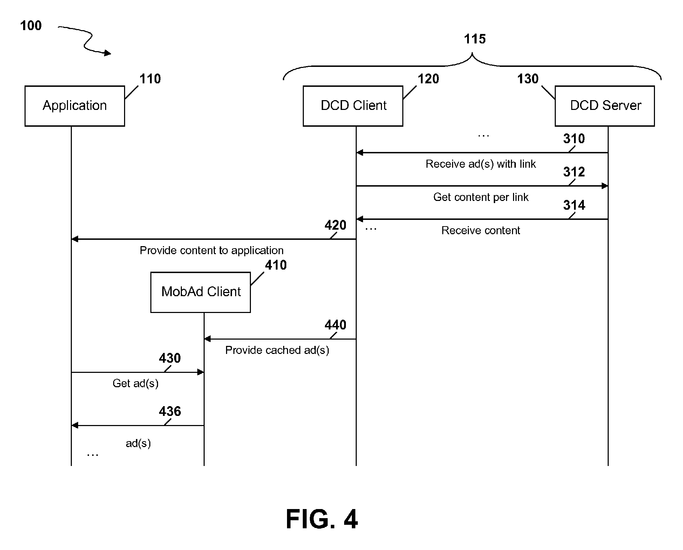

Reference is now made to **Figure 4. Figure 4** is an alternative embodiment to **Figure 3** in which a mobile advertising (MobAd) client **410** is provided. Application **110** still communicates with DCD client **120** and DCD client **120** communicates with DCD server **130.**

DCD client **120** receives a message **310** which provides an advertisement with an aux-content-link attribute in the metadata pointing to content for DCD client **120,** and ultimately for application **110.** Message **310** can be solicited or unsolicited, as described previously.

In response to message **310,** DCD client **120** sends message **312** to DCD server **130** or other source of content to retrieve the content and a response **314** containing the content is received back at DCD client **120.**

DCD client **120** then provides the content to application **110** in message **420.** Message **420** can be communicated in a solicited or unsolicited manner. Specifically, application **110** can request content or, for example, be registered or subscribed with DCD client **120** to have content pushed to it.

When consuming the content received in message **420,** application **110** recognizes or otherwise determines that it needs to retrieve the advertisement and in response it sends a request **430** to mobile advertising client **410** to request the advertisements and receives a response **436** with the advertisement from the mobile advertising client **410.**

Mobile advertising client **410** can request the advertisements from DCD client **120** as described above with reference to **Figure 2****.** Alternatively, as shown in **Figure 4****,** the DCD client **120** could provide the advertisements to mobile advertising client **410,** as shown by message **440,** prior to advertisements being requested by application **110.**

**Figure 3** and **4** therefore use a different approach for linking of the advertisement with content using the aux-content-link metadata attribute. The attribute in this case is used as a link to associated content while delivering the advertising content using the DCD enabler **115,** and specifically the DCD client **120** and server **130.**

In the embodiments of **Figure 3** and **4**, the aux-content-link attribute located in the content metadata and associated with advertisement content contains a reference which could be a URL identifier such as URI or content identifier to the content to which the advertisement is related.

An example of a message **310** from **Figures 3** and **4** above could be:

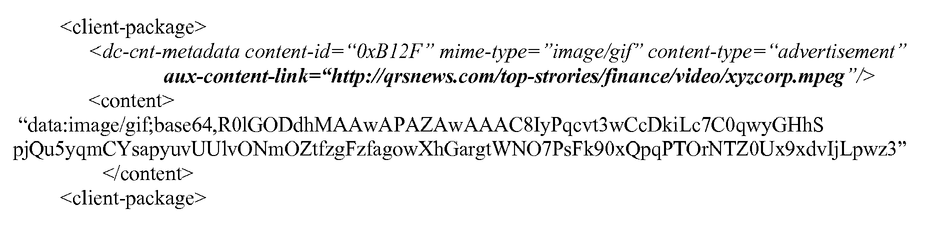

As will be appreciated, the previously-described embodiments are not configured such that the reception of the advertisement drives the consumption of the associated content. Rather, the present disclosure provides an advantage that the limited size of the advertisement can initially be communicated over push bearers with the retrieval of the larger size content being done over dedicated pull bearers. In the example message **310** above, the content is video and could potentially be large. The use of the link allows pull bearers to be used. For example, subsequent retrieval could utilize hypertext transfer protocol (HTTP).

From a target application's perspective, both the content and advertisement appear to be pushed since the retrieval of the content is automatic based on the aux-content-link attribute.

In a further embodiment, a further service or enabler which uses a dynamic content delivery enabler **115** from **Figures 1** to **4** or that is associated with the use of dynamic content delivery may provide extensible markup language (XML) schema extensions for dynamic content delivery metadata attributes that define how to parse and process the dynamic content delivery metadata attributes in the context of another enabler.

In particular, in one embodiment, the content of the aux-content-link attribute may contain an XML document that encapsulates an XML element or attribute with reference to the associated advertisement plus some XML additional elements or attributes. In other words, additional processing may be provided for the aux-content-link attributes. The addition elements may include, for example, a target application to which the advertisement should be passed; a processing model or action such as "display upon retrieval", "cache until requested" among others; a retrieval mode such as "immediate", "with a delay" such as when content is consumed or by a schedule such as retrieving once a day or a predefined date or time or based on periodic intervals; any additional metadata such as expiration date or time, an encrypted identifier for the add within the content or a non-public identifier, among others. The list of the additional XML elements is not exhaustive and other additional XML elements may be added.

In one embodiment, an XML name space declaration can be made to allow the processing of the additional elements or attributes for the XML. Thus, XML elements related to non-dynamic content delivery grammar can be scoped to a declared or predefined name space. A DCD client **120** could then use the name space declaration to locate appropriate schema and to parse the aux-content-link attribute.

An exemplary XML fragment is provided below:

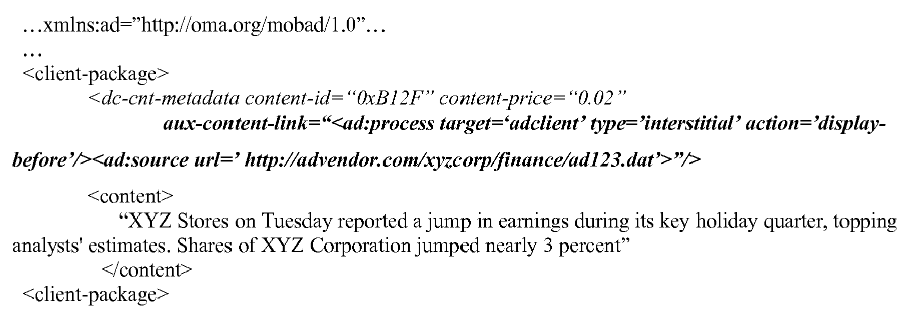

This alternative embodiment therefore allows for the extension of the XML attribute to provide for processing intelligence with regard to the link to either the advertisement, as described above with reference to **Figures 1** and **2****,** or with regard to the content as described above with reference to **Figures 3** and **4****.**

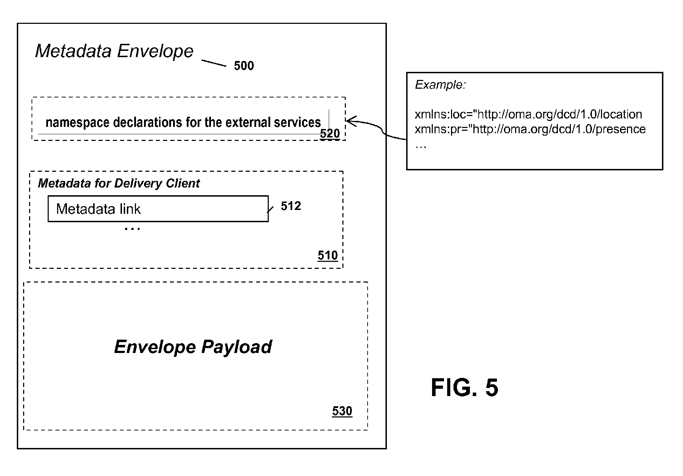

Reference is now made to **Figure 5****,** which illustrates an exemplary metadata envelope that may be used for providing content and metadata to delivery client **120.** The envelope model illustrated in **Figure 5** is provided as an example and other means for conveying metadata, such as RSS and ATOM feeds with embedded metadata and content would be apparent to those skilled in the art having regard to the present disclosure.

**Figure 5****,** metadata envelope **500** is destined for delivery client **120.** In this regard, metadata envelope 500 includes a metadata portion **510** for the delivery client **120.** This metadata portion **510** includes the aux-content-link **512,** which in the embodiment of **Figure 1** or **2** would include a link to advertising content, or in the embodiment **Figure 3** or **4** a link to the content.

A namespace declaration **520** could be utilised by the content provider or delivery server to allow XML schema to be utilised as part of the metadata for the delivery client **510.**

Further, envelope payload **530** is provided in metadata envelope **500.** Such envelope payload **530** could include the content that application **110** requested or could include advertisements in the embodiments of **Figures 3** and **4****.**

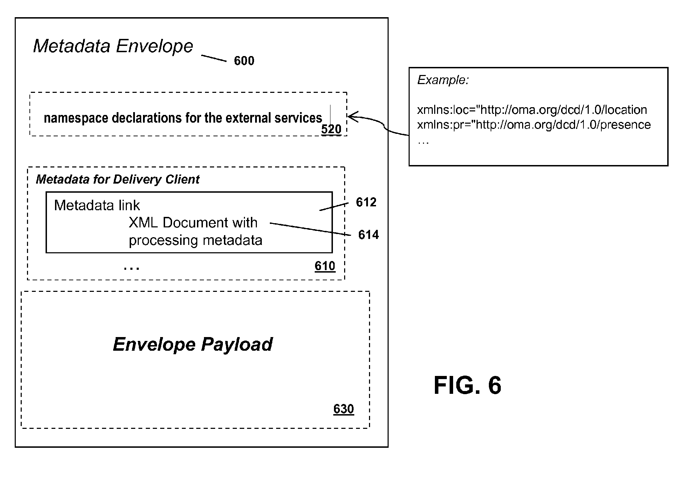

The above can be extended to provide processing information. In this regard reference is made to **Figure 6****.** In **Figure 6** metadata envelope **600** includes metadata for delivery client **610.** An aux-content-link **612** further includes processing metadata **614.**

The processing metadata **614** can utilise a namespace declaration **620** to extend XML schema.

Further, envelope payload **630** is provided in metadata envelope **600.**

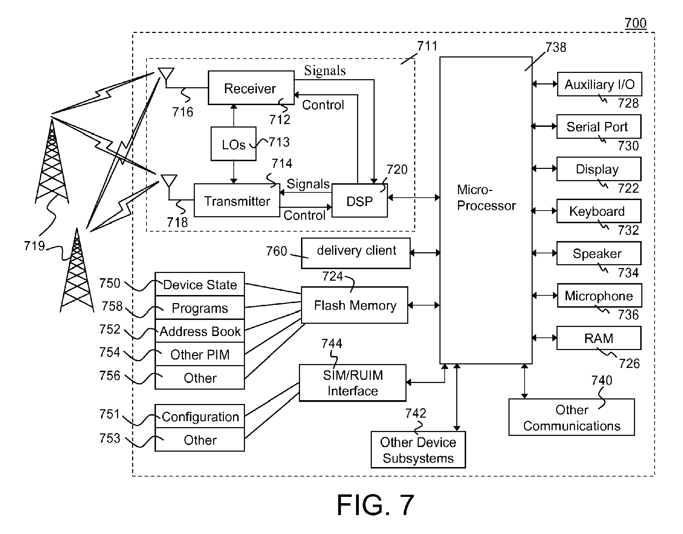

The delivery client and application can be configured on any device, both wired and wireless. If implemented on a mobile device, one particular mobile device that is illustrated as an example is provided in **Figure 7****.** Reference is now made to **Figure 7****.**

**Figure 7** is a block diagram illustrating a mobile device capable of being used with embodiments of the apparatus and method of the present application. Mobile device 700 is typically a two-way wireless communication device having voice and data communication capabilities. Mobile device **700** may have the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **700** is enabled for two-way communication, it will incorporate a communication subsystem **711,** including both a receiver **712** and a transmitter **714,** as well as associated components such as one or more, embedded or internal, antenna elements **716** and **718,** local oscillators (LOs) **713,** and a processing module such as a digital signal processor (DSP) **720.** As will be apparent to those skilled in the field of communications, the particular design of the communication subsystem **711** will be dependent upon the communication network in which the device is intended to operate.

Network access requirements will also vary depending upon the type of network **719.** In some CDMA networks network access is associated with a subscriber or user of mobile device **700.** A CDMA mobile device may require a removable user identity module (RUIM) or a subscriber identity module (SIM) card in order to operate on a CDMA network. The SIM/RUIM interface **744** is normally similar to a card-slot into which a SIM/RUIM card can be inserted and ejected like a diskette or PCMCIA card. The SIM/RUIM card can have approximately 64K of memory and hold many key configuration **751,** and other information **753** such as identification, and subscriber related information.

When required network registration or activation procedures have been completed, mobile device **700** may send and receive communication signals over the network **719.** As illustrated in **Figure 7****,** network **719** can consist of multiple base stations communicating with the mobile device. For example, in a hybrid CDMA 1x EVDO system, a CDMA base station and an EVDO base station communicate with the mobile device and the mobile device is connected to both simultaneously. The EVDO and CDMA 1x base stations use different paging slots to communicate with the mobile device.

Signals received by antenna **716** through communication network **719** are input to receiver **712,** which may perform such common receiver functions as signal amplification, frequency down conversion, filtering, channel selection and the like, and in the example system shown in **Figure 7****,** analog to digital (A/D) conversion. A/D conversion of a received signal allows more complex communication functions such as demodulation and decoding to be performed in the DSP **720.** In a similar manner, signals to be transmitted are processed, including modulation and encoding for example, by DSP **720** and input to transmitter **714** for digital to analog conversion, frequency up conversion, filtering, amplification and transmission over the communication network **719** via antenna **718.** DSP **720** not only processes communication signals, but also provides for receiver and transmitter control. For example, the gains applied to communication signals in receiver **712** and transmitter **714** may be adaptively controlled through automatic gain control algorithms implemented in DSP **720.**

Mobile device **700** generally includes a microprocessor **738** which controls the overall operation of the device. Communication functions, including at least data and voice communications, are performed through communication subsystem **711.** Microprocessor **738** also interacts with further device subsystems such as the display **722,** flash memory **724,** random access memory (RAM) **726,** auxiliary input/output (I/O) subsystems **728,** serial port **730,** one or more keyboards or keypads **732,** speaker **734,** microphone **736,** other communication subsystem **740** such as a short-range communications subsystem and any other device subsystems generally designated as **742.** Serial port **730** could include a USB port or other port known to those in the art.

Some of the subsystems shown in **Figure 7** perform communication-related functions, whereas other subsystems may provide "resident" or on-device functions. Notably, some subsystems, such as keyboard **732** and display **722,** for example, may be used for both communication-related functions, such as entering a text message for transmission over a communication network, and device-resident functions such as a calculator or task list.

Operating system software used by the microprocessor **738** is preferably stored in a persistent store such as flash memory **724,** which may instead be a read-only memory (ROM) or similar storage element (not shown). Those skilled in the art will appreciate that the operating system, specific device applications, or parts thereof, may be temporarily loaded into a volatile memory such as RAM **726.** Received communication signals may also be stored in RAM **726.**

As shown, flash memory **724** can be segregated into different areas for both computer programs **758** and program data storage **750,** 752, **754** and **756.** These different storage types indicate that each program can allocate a portion of flash memory **724** for their own data storage requirements. Microprocessor **738,** in addition to its operating system functions, preferably enables execution of software applications on the mobile device. A predetermined set of applications that control basic operations, including at least data and voice communication applications for example, will normally be installed on mobile device **700** during manufacturing. Other applications could be installed subsequently or dynamically.

One software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **719.** In one embodiment, the PIM data items are seamlessly integrated, synchronized and updated, via the wireless network **719,** with the mobile device user's corresponding data items stored or associated with a host computer system. Further applications may also be loaded onto the mobile device **700** through the network **719,** an auxiliary I/O subsystem **728,** serial port **730,** short-range communications subsystem **740** or any other suitable subsystem **742,** and installed by a user in the RAM **726** or preferably a nonvolatile store (not shown) for execution by the microprocessor **738.** Such flexibility in application installation increases the functionality of the device and may provide enhanced on-device functions, communication-related functions, or both. For example, secure communication applications may enable electronic commerce functions and other such financial transactions to be performed using the mobile device **700.**

In a data communication mode, a received signal such as a text message or web page download will be processed by the communication subsystem **711** and input to the microprocessor **738,** which preferably further processes the received signal for output to the display **722,** or alternatively to an auxiliary I/O device **728.** A delivery client **760,** which could be equivalent to delivery client **120** could also process the input.

A user of mobile device **700** may also compose data items such as email messages for example, using the keyboard **732,** which is preferably a complete alphanumeric keyboard or telephone-type keypad, in conjunction with the display **722** and possibly an auxiliary I/O device **728.** Such composed items may then be transmitted over a communication network through the communication subsystem **711.**

For voice communications, overall operation of mobile device **700** is similar, except that received signals would preferably be output to a speaker **734** and signals for transmission would be generated by a microphone **736.** Alternative voice or audio I/O subsystems, such as a voice message recording subsystem, may also be implemented on mobile device **700.** Although voice or audio signal output is preferably accomplished primarily through the speaker **734,** display **722** may also be used to provide an indication of the identity of a calling party, the duration of a voice call, or other voice call related information for example.

Serial port **730** in **Figure 7****,** would normally be implemented in a personal digital assistant (PDA)-type mobile device for which synchronization with a user's desktop computer (not shown) may be desirable, but is an optional device component. Such a port **730** would enable a user to set preferences through an external device or software application and would extend the capabilities of mobile device **700** by providing for information or software downloads to mobile device **700** other than through a wireless communication network. The alternate download path may for example be used to load an encryption key onto the device through a direct and thus reliable and trusted connection to thereby enable secure device communication. As will be appreciated by those skilled in the art, serial port **730** can further be used to connect the mobile device to a computer to act as a modem.

Other communications subsystems **740,** such as a short-range communications subsystem, is a further optional component which may provide for communication between mobile device **700** and different systems or devices, which need not necessarily be similar devices. For example, the subsystem **740** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for associating content and advertisement at a delivery client on a device, the method comprising:
receiving a first data set having a metadata link associated therewith, the metadata link implies retrieval of a second data set;
retrieving the second data set from a location defined by the metadata link;
providing content to a first application, the content being one of the first data set and the second data set; and
providing an advertisement to the first application or to a second application, the advertisement being the other one of the first data set and the second data set.

2. The method of claim 1 wherein the receiving is performed over a push bearer.

3. The method of claim 1 wherein the receiving is performed based on a request for the first data set.

4. The method of any one of claims 1 to 3 wherein the link is an aux-content-link attribute in Content Metadata as specified in Open Mobile Alliance dynamic content delivery enabler.

5. The method of any one of claims 1 to 4 wherein the retrieving the second data set utilises a delivery server.

6. The method of any one of claims 1 to 5 wherein the providing the advertisement utilises a mobile advertising client between the application and delivery client.

7. The method of any one of claims 1 to 6 wherein the device is a mobile device.

8. The method of any one of claims 1 to 7 wherein the metadata link includes a document encapsulating an element or attribute for additional processing of the second data set.

9. The method of claim 8 wherein the document is an extensible markup language document.

10. The method of any one of claims 1 to 9 wherein the providing the content and the providing the advertisement is performed by pushing the content and advertisement to the application.

11. A device including a delivery client for associating content and advertisement, device comprising:
a communications subsystem;
an application configured to consume content; and
the delivery client,
wherein the device is configured to perform steps of any one of claims 1 to 10.

12. The device of claim 11, wherein the device is a mobile device.

## Amended claims

### Amended claims in accordance with Rule 137(2) EPC.

**1.** A method for associating content and advertisement at a delivery client on a device, the method comprising:
the delivery client receiving a first data set having a metadata link associated therewith, the metadata link implies retrieval of a second data set;
the delivery client retrieving the second data set from a location defined by the metadata link;
the delivery client providing content to a first application, the content being one of the first data set and the second data set; and
the delivery client providing an advertisement to a second application configured to process the advertisement, the advertisement being the other one of the first data set and the second data set;
wherein the metadata link is an aux-content-link attribute in Content Metadata as specified in Open Mobile Alliance dynamic content delivery enabler.

**2.** The method of claim 1 wherein the receiving is performed over a push bearer.

**3.** The method of claim 1 wherein the receiving is performed based on a request for the first data set.

**4.** The method of any one of claims 1 to 3 wherein the retrieving the second data set utilises a delivery server.

**5.** The method of any one of claims 1 to 4 wherein the providing the advertisement utilises a mobile advertising client between the second application and the delivery client.

**6.** The method of any one of claims 1 to 5 wherein the device is a mobile device.

**7.** The method of any one of claims 1 to 6 wherein the metadata link includes a document encapsulating an element or attribute for additional processing of the second data set.

**8.** The method of claim 7 wherein the document is an extensible markup language document.

**9.** The method of any one of claims 1 to 8 wherein the providing the content and the providing the advertisement is performed by pushing the content to the first application, and pushing the advertisement to the second application.

**10.** A device including a delivery client for associating content and advertisement, thedevice comprising:
a communications subsystem;
an application configured to consume content; and
the delivery client,
wherein the device is configured to perform steps of any one of claims 1 to 9.

**11.** The device of claim 10, wherein the device is a mobile device.
